# EUROPEAN PATENT SPECIFICATION

(11) **EP 2 842 877 B1**
(45) Date of publication and mention of the grant of the patent: **23.03.2016**
(21) Application number: 14161271.3
(22) Date of filing: 24.03.2014
(51) Int. Cl.: B65B 23/06

(54) **Egg conveying apparatus and method for transferring egg**
Eibeförderungsvorrichtung und Verfahren zur Übertragung von Eiern
Dispositif pour transporter des oeufs et procédé pour transférer des oeufs

(30) Priority: 28.08.2013 JP 2013176726
(43) Date of publication of application: 04.03.2015
(73) Proprietor: Nabel Co., Ltd., Kyoto-shi Kyoto 601-8444 (JP)
(72) Inventor: Takada, Masataka, Kyoto-shi, Kyoto 6018444 (JP)
(74) Representative: Horn Kleimann Waitzhofer Patentanwälte PartG mbB

(56) References cited:
- EP-A1- 2 174 896
- WO-A1-2008/130256
- WO-A1-2013/006052
- US-A- 4 965 981

## Description

### TECHNICAL FIELD

The present invention relates to an egg conveying apparatus according to the preamble of claim 1 for use in, for example, a sorting and packaging system for sorting and packaging eggs, and a method for transferring eggs. More particularly, the present invention relates to a conveying apparatus including a transfer portion that transfers eggs from a first conveying portion that conveys eggs in a plurality of lines to a second conveying portion that conveys eggs in a different number of lines from that of the first conveying portion, and a method by which the transfer portion transfers eggs.

### BACKGROUND ART

Various automatic sorting and packaging systems are known as systems for automatically sorting and automatically packaging eggs based on weight data etc. For example, a sorting and packaging system disclosed in JP S53-8423B includes a conveying apparatus having a first conveying portion that conveys eggs arranged in six longitudinal lines in a longitudinal direction, a second conveying portion that receives eggs from the first conveying portion and conveys the eggs in a single lateral line in a lateral direction, and a transfer portion that is interposed between the first and second conveying portions and that sequentially receives eggs that have been conveyed thereto by the first conveying portion in the six longitudinal lines in the longitudinal direction, the transfer portion receiving the eggs in such a manner that six eggs are received at one time, and then delivers the eggs to the second conveying portion, which in turn conveys the eggs in a single lateral line in the lateral direction.

This transfer portion includes six egg receptacles that receive six eggs in a single transverse row of the eggs conveyed in the six longitudinal lines from the first conveying portion in one-to-one correspondence. Each of the egg receptacles receives an egg with the major axis of the egg extending in the lateral direction, operates in an arc shape in a vertical plane containing the lateral direction and a vertical direction, thereby changing the orientation of the egg by 90° so that the major axis of the egg is oriented in the vertical direction, and then delivers the egg to the second conveying portion.

Moreover, each of the egg receptacles discharges the egg in the course of the arc-shaped operation in the vertical plane, thereby imparting a velocity component in the lateral direction to the egg, and delivers the egg to the second conveying portion in synchronization therewith. Thus, the impact on the egg during delivery of the egg to the second conveying portion is alleviated.

Furthermore, the six egg receptacles receive six eggs from the first conveying portion at a first pitch, and then discharge the six eggs to the second conveying portion at different timings, thereby delivering the six eggs to the second conveying portion such that the egg pitch is converted from the first pitch to a second pitch that is smaller than the first pitch. In the second conveying portion, since the conveyance pitch has been reduced, the conveying amount of the second conveying portion can be increased without changing the conveying speed, and therefore the processing speed of sorting and packaging can be increased when compared with cases where pitch conversion is not performed. That is to say, the six egg receptacles achieve the three functions, that is, changing of the egg orientation, conversion of the pitch between eggs, and synchronization for delivery of the eggs, with a single operation.

However, with recent improvements in the processing speed of the sorting and packaging systems, it also is required to speed up the transfer of the transfer portion, and this requirement makes it difficult to achieve the aforementioned three functions with a single operation. That is to say, with the transfer portion disclosed in JP S53-8423B, a large number of egg transfer failures such as breakage of eggs, dropping of eggs, etc. have occurred because of the speed-up.

To address this issue, an egg conveying apparatus disclosed in JP 2008-179475A has been developed in which, in contrast to the conveying apparatus disclosed in JP S53-8423B, the three functions are separated from one another. The developed conveying apparatus includes a transfer portion having an orientation changing portion that changes the egg orientation, a pitch converting portion that converts the egg pitch, and a synchronizing portion that synchronizes eggs with the second conveying portion. With this conveying apparatus, the separation of the functions enables stable transfer of eggs.

JP S53-8423B and JP 2008-179475A, which discloses an egg conveying apparatus according to the preamble of claim 1, are examples of related art.

However, even the automatic egg sorting and packaging apparatus disclosed in JP 2008-179475A had the following problems. Specifically, in the pitch converting portion disclosed in JP 2008-179475A, multiple transverse rows of egg receptacles are provided in a conveying direction, each transverse row consisting of six egg receptacles arranged side-by-side transversely to the conveying direction. The multiple rows of egg receptacles are moved in an orbital path by an endless conveyor, and the pitch between egg receptacles of the six egg receptacles is converted during the orbital motion.

However, no matter how stably eggs are transferred by the transfer portion, there are cases where an egg may be broken during delivery to the egg receptacles, resulting in contamination of an egg receptacle by the contents of the egg such as the albumen and the yolk. The contaminated egg receptacle needs washing, but in order to specify and wash the contaminated egg receptacle, it is necessary to move the egg receptacles in the orbital path to convey the specified egg receptacle to a location where the egg receptacle can be cleaned. Accordingly, the pitch converting portion disclosed in JP 2008-179475A had a problem that cleaning of the egg receptacles is not straightforward.

This pitch converting mechanism also had the problem of an increase in the cost due to the provision of multiple egg receptacles. Furthermore, the necessity for a space in which the mechanism for moving the multiple egg receptacles in an orbital path for pitch conversion is disposed disadvantageously increases the size of the apparatus.

### SUMMARY OF THE INVENTION

The present invention has been made to solve the above-described problems, and it is an object thereof to transfer eggs in a simple and stable manner.

An egg conveying apparatus according to the present inventions is as stated in the appended claim 1, and includes a first conveying portion configured to convey eggs arranged in "n" longitudinal lines in a longitudinal direction, a second conveying portion configured to receive eggs from the first conveying portion and to convey the eggs in a lateral direction, and a transfer portion interposed between the first conveying portion and the second conveying portion and configured to transfer eggs from the first conveying portion to the second conveying portion .

The transfer portion includes a pitch converting portion configured to receive "n" eggs corresponding to a single transverse row of eggs that are arranged in the "n" longitudinal lines from the first conveying portion at a first pitch and to convert the first pitch to a second pitch that is smaller than the first pitch, and a speed synchronizing portion configured to receive "n" eggs from the pitch converting portion at the second pitch and to deliver (hand over) the "n" eggs to the second conveying portion in synchronization in the lateral direction.

The pitch converting portion includes "n" first egg receptacles configured to receive "n" eggs in one-to-one correspondence, and the "n" first egg receptacles are characterized by repeating a reciprocating movement between a first position in which the first egg receptacles receive eggs at the first pitch and a second position in which the first egg receptacles deliver eggs to the speed synchronizing portion. The first egg receptacles are configured to move only in the lateral direction between the first position and the second position.

With this egg conveying apparatus, the transfer portion, which receives "n" eggs from the first conveying portion at the first pitch, changes the first pitch to the second pitch, and transfers the eggs in synchronization with the second conveying portion, is divided into the pitch converting portion and the speed synchronizing portion, and therefore eggs are stably transferred.

Furthermore, in the pitch converting portion, pitch conversion is performed by the "n" first egg receptacles repeating a reciprocating motion (instead of an orbital motion) between the first pitch and the second pitch. Accordingly, it is sufficient if the pitch converting portion includes only "n" egg receptacles.

With the egg conveying apparatus according to the present invention, even though eggs are stably transferred from the first conveying portion to the second conveying portion, cleaning of the transfer portion is easy, and the structure is simple and small.

A method for transferring eggs according to the present invention transfers eggs from a first conveying portion configured to convey eggs arranged in "n" longitudinal lines in a longitudinal direction to a second conveying portion configured to convey eggs in a lateral direction. This method for transferring eggs includes a first step of receiving "n" eggs corresponding to a single transverse row of eggs that are arrange in the "n" longitudinal lines from the first conveying portion at a first pitch with a pitch converting portion comprising "n" egg receptacles, a second step of converting the first pitch to a second pitch that is smaller than the first pitch after the first step, a third step of receiving the "n" eggs at the second pitch after the second step, and a fourth step of delivering the "n" eggs to the second conveying portion in synchronization with a conveying speed of the second conveying portion after the third step.

The second step includes performing pitch conversion from the first pitch to the second pitch by a reciprocating motion in which the egg receptacles move only in the lateral direction between a first position in which the egg receptacles receive the eggs and a second position in which the egg receptacles deliver the eggs, and eggs are continuously transferred from the first conveying portion to the second conveying portion by repeating the first to fourth steps.

With this method for transferring eggs, the pitch conversion from the first pitch to the second pitch is performed before the speed is synchronized with that of the second conveying portion. In other words, the pitch conversion function and the speed synchronization function are separated, and therefore eggs are stably transferred. Furthermore, the pitch conversion is performed by a reciprocating motion instead of an orbital motion, and therefore eggs can be transferred in a simple manner.

The present invention enables transfer of eggs in a simple and stable manner.

### BRIEF DESCRIPTION OF THE DRAWINGS

FIG. 1 is a diagram schematically showing a sorting and packaging system including an egg conveying apparatus according to an embodiment of the present invention.
FIG. 2 is a perspective view showing a first conveying portion and a transfer portion of the egg conveying apparatus in FIG. 1.
FIGS. 3A and 3B show retaining containers included in the second conveying portion of the egg conveying apparatus in FIG. 1, where FIG. 3A is a plan view showing the retaining containers, and FIG. 3B is a side view showing a retaining container.
FIG. 4 is a perspective view showing an orientation converting structure of the transfer portion in FIG. 2.
FIGS. 5A to 5C show a pitch converting portion of the transfer portion in FIG. 2 in a state in which the pitch converting portion is ready to receive eggs, where

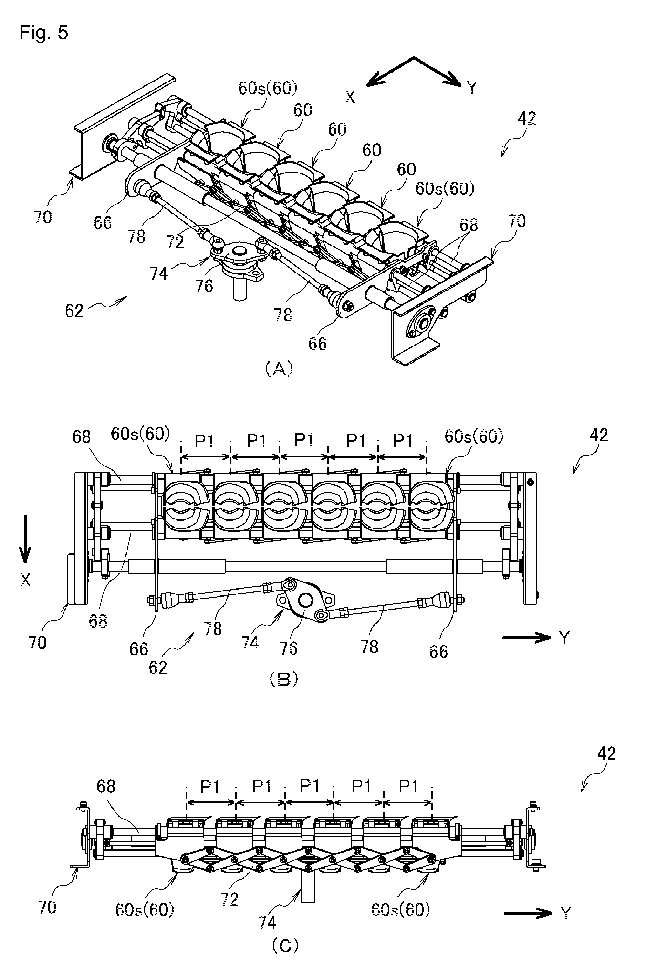

FIG. 5A is a perspective view of the pitch converting portion, FIG. 5B is a plan view of the pitch converting portion, and FIG. 5C is a back view of the pitch converting portion.

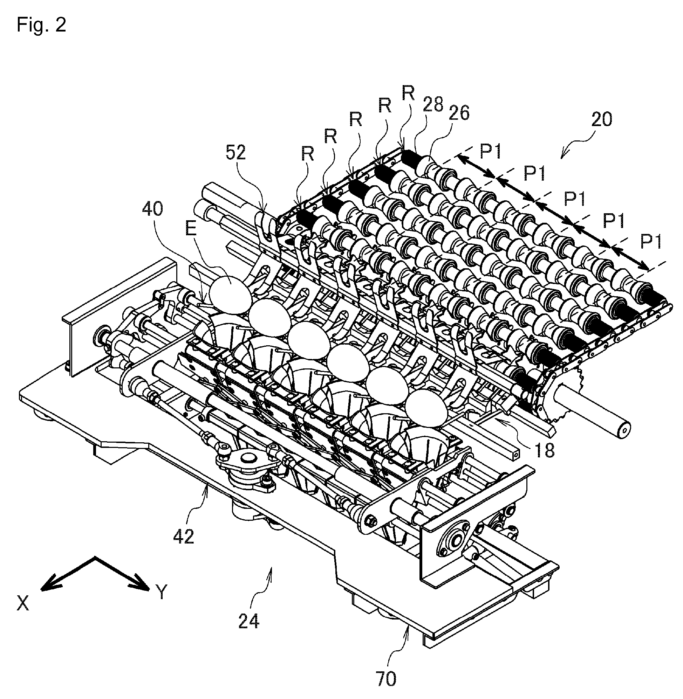

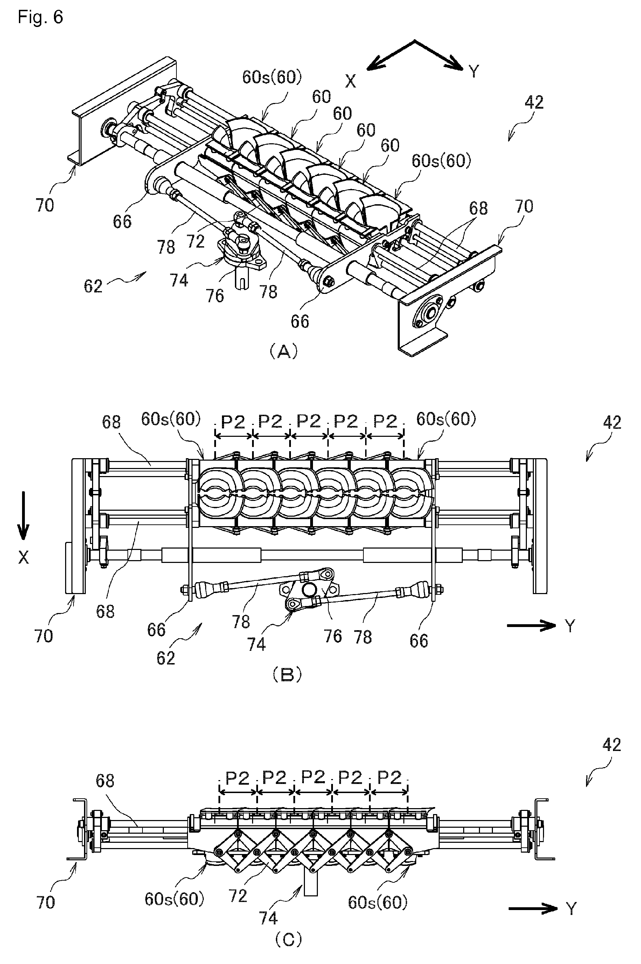

FIGS. 6A to 6C show the pitch converting portion of the transfer portion in FIG. 2 in a state in which the pitch converting portion has received eggs and converted the pitch, where FIG. 6A is a perspective view of the pitch converting portion, FIG. 6B is a plan view of the pitch converting portion, and FIG. 6C is a back view of the pitch converting portion.

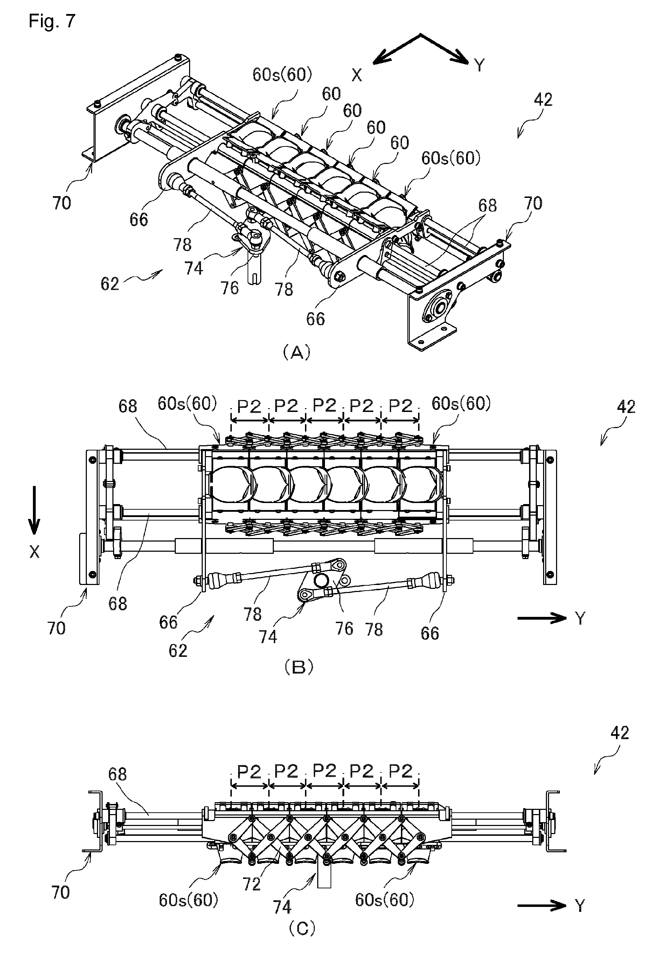

FIGS. 7A to 7C show the pitch converting portion of the transfer portion in FIG. 2 in a state in which the pitch converting portion discharges eggs, where FIG. 7A is a perspective view of the pitch converting portion, FIG. 7B is a plan view of the pitch converting portion, and FIG. 7C is a back view of the pitch converting portion.

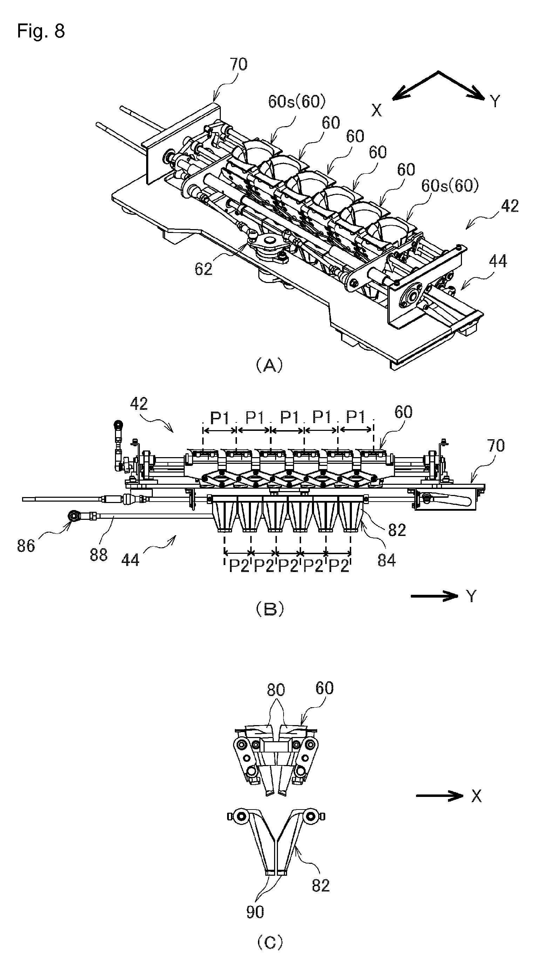

FIGS. 8A to 8C show the pitch converting portion and a speed synchronizing portion of the transfer portion in FIG. 2, where FIG. 8A is a perspective view of the pitch converting portion and the speed synchronizing portion, FIG. 8B is a back view of the pitch converting portion and the speed synchronizing portion, and FIG. 8C is a side cross-sectional view of the pitch converting portion and the speed synchronizing portion.

### EMBODIMENTS OF THE INVENTION

### Description of Sorting and Packaging System

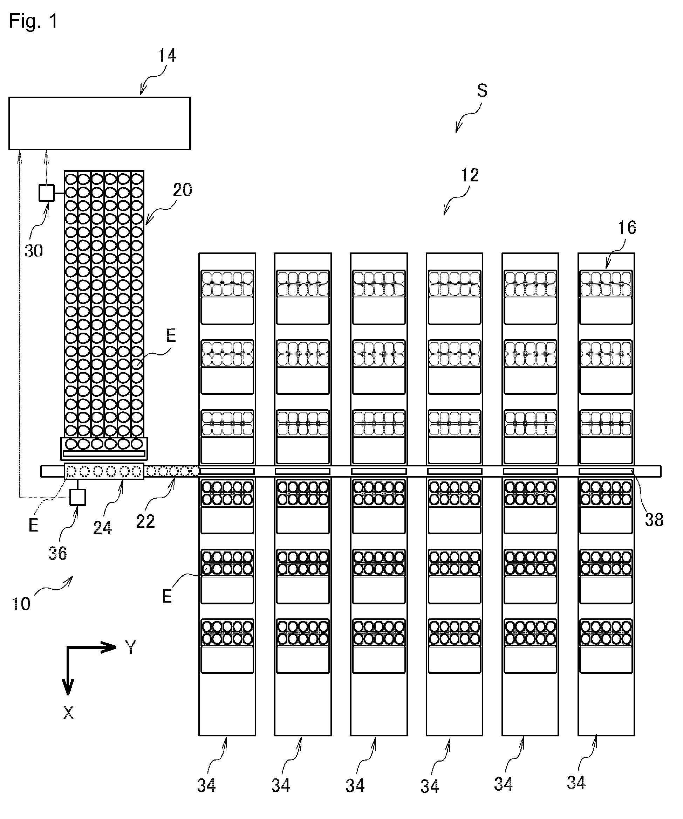

As shown in FIG. 1, an egg sorting and packaging system S includes an egg conveying apparatus 10 according to an embodiment of the present invention, a packaging apparatus 12 that receives eggs E conveyed thereto by the egg conveying apparatus 10 and packages the eggs E in cartons, and a controller 14 that controls these apparatuses.

The egg sorting and packaging system S receives a large number of eggs E having various physical characteristics (e.g., weight, presence or absence of cracks, presence or absence of dirt, presence or absence of abnormalities in eggs), sorts the eggs E based on the physical characteristics while conveying the eggs E with the conveying apparatus 10, and packages the eggs E that have been sorted by the physical characteristics in packaging cartons 16 with the packaging apparatus 12.

The egg sorting and packaging system S includes a measuring apparatus 18 (see FIG. 2) that measures the weights of eggs, as is conventionally well known, and may also incorporate an inspecting apparatus (see JP H9-47184A, JP 2008-309678A, JP H11-41589A, etc., for example) that inspects eggs for cracks, dirt, abnormalities in the eggs, and the like, as is conventionally well known.

The controller 14 controls the various apparatuses so that the egg sorting and packaging system S sorts and packages eggs E based on their physical characteristics. For this purpose, the controller 14 includes hardware such as a CPU, a memory, and the like and software such as a program and appropriately controls the various constituent apparatuses, such as the conveying apparatus 10, the packaging apparatus 12, the aforementioned inspecting apparatus, and the like, of the sorting and packaging system S.

An egg E has a slightly pointed narrow end and a wide end opposite to the narrow end, and an imaginary line connecting the narrow end and the wide end is referred to as the major axis. The egg sorting and packaging system S includes a direction aligning apparatus (not shown) upstream of the conveying apparatus 10 (see JP 2007-222221A, for example). The direction aligning apparatus aligns the directions (orientations) of a plurality of eggs E so that the narrow ends (and the wide ends) of the eggs are oriented in a particular direction, and then delivers the eggs E to the conveying apparatus 10.

The conveying apparatus 10 includes a first conveying portion 20 that conveys the eggs E in the direction of arrow X in a state in which the eggs E are arranged in "n" longitudinal lines, a second conveying portion 22 that receives the eggs E from the first conveying portion 20 and conveys the eggs E in the direction of arrow Y, and a transfer portion 24 that transfers the eggs E from the first conveying portion 20 to the second conveying portion 22. In the following description, it is assumed that n = 6; however, it is sufficient if n ≥ 2.

In this embodiment, the longitudinal direction is a forward-backward direction along arrow X, and the lateral direction is a forward-backward direction along arrow Y. Also, the longitudinal direction and the lateral direction are defined in a substantially horizontal plane, and the first conveying portion 20 conveys eggs E in the longitudinal direction with the eggs E arranged in six longitudinal lines, while the second conveying portion 22 conveys eggs E in the lateral direction with the eggs E arranged in a single lateral line. The relationship between the longitudinal direction and the lateral direction is not limited to an orthogonal relationship, but it is sufficient if the two directions cross each other.

As shown in FIG. 2, the first conveying portion 20 includes multiple rollers 26 that are aligned in the longitudinal direction and the lateral direction. A single row of rollers 26 of the multiple rollers 26 of the first conveying portion 20 is connected together by a shaft member 28 and constitutes one roller group R. The roller groups R are arranged side-by-side in the longitudinal direction, and pairs of rollers 26 adjacent to each other in the longitudinal direction retain single eggs E together by holding the eggs E therebetween.

In this embodiment, a single roller group R includes six rollers 26, and multiple roller groups R are arranged side-by-side in the longitudinal direction. Thus, eggs E are placed in the first conveying portion 20 in a state in which the eggs E are arranged in six longitudinal lines. The six rollers 26 in each roller group R are fixed to the shaft member 28 at a first pitch P1 and thus connected together, so that the eggs E that are held by individual pairs of rollers 26 adjacent to each other in the longitudinal direction are also retained while being spaced at the first pitch P1 in the lateral direction.

The roller groups R including the pairs of rollers 26 that individually hold the eggs E continuously move in the direction of arrow X while retaining the eggs E, and thus the eggs E are continuously conveyed. Each pair of rollers 26 adjacent to each other in the longitudinal direction receives an egg E from the direction aligning apparatus with the narrow end (and the wide end) of the egg E pointing in a particular direction, and moves in the direction of arrow X while rotating about the individual shaft members 28, thereby conveying the egg E in the direction of arrow X while rotating the egg E about its major axis.

In this embodiment, in the first conveying portion 20, the individual eggs E are retained by the rollers 26 with the narrow ends of the eggs E pointing in the direction of arrow Y. The first conveying portion 20 may be a conventionally well-known roller bar conveyor. However, the first conveying portion may also be any other conveyor capable of conveying eggs.

In the first conveying portion 20, one egg E is held between one pair of rollers 26 adjacent to each other in the longitudinal direction, and therefore the positions of the eggs E can be specified by specifying the positions of the rollers 26. The first conveying portion 20 is provided with a first encoder 30 that is operable in response to movement of the roller groups R in the conveying direction (see FIG. 1), and a pulse signal is generated each time the eggs E held between a pair of roller groups R move a predetermined distance. Thus, the positions of the large number of eggs E in the first conveying portion 20, which eggs are conveyed in the six longitudinal lines in the first conveying portion 20, are specified.

With reference again to FIG. 1, the transfer portion 24 transfers eggs E that have been conveyed thereto by the first conveying portion 20 with their major axes extending in the horizontal direction into the second conveying portion 22 while changing the egg orientation so that the major axes of the eggs E extend in the vertical direction. Also, the second conveying portion 22 conveys eggs E at a second pitch P2 that is smaller than the first pitch P1, and the transfer portion 24 receives six eggs E from the first conveying portion at the first pitch, changes the pitch of the six eggs E to the second pitch P2, and then delivers the six eggs E to the second conveying portion.

In the egg conveying apparatus according to the embodiment of the present invention, the pitch between the longitudinal lines of the first conveying portion corresponds to the conveyance pitch of the second conveying portion. This means that the first pitch is the pitch between the longitudinal lines of the first conveying portion, the second pitch is the conveyance pitch of the second conveying portion, and the processing speed of the sorting and packaging system S can be increased by converting the pitch between the eggs from the first pitch to the second pitch, which is smaller than the first pitch. For example, a sorting and packaging system is known in which the first pitch in the first conveying portion is designed to be 76.2 mm, and the second pitch in the second conveying portion is designed to be 57.15 mm (see JP 2008-179475A).

Furthermore, the second conveying portion 22 continuously conveys eggs E, as described later, and the transfer portion 24 delivers eggs E to the second conveying portion 22 while moving the eggs E so as to allow synchronization of the movement of the eggs E and the continuous operation of the second conveying portion 22. Accordingly, the transfer portion 24 changes the egg orientation, converts the pitch between six eggs, and, furthermore, synchronizes the eggs E with the conveying speed of the second conveying portion 22, before delivering the eggs E to the second conveying portion 22.

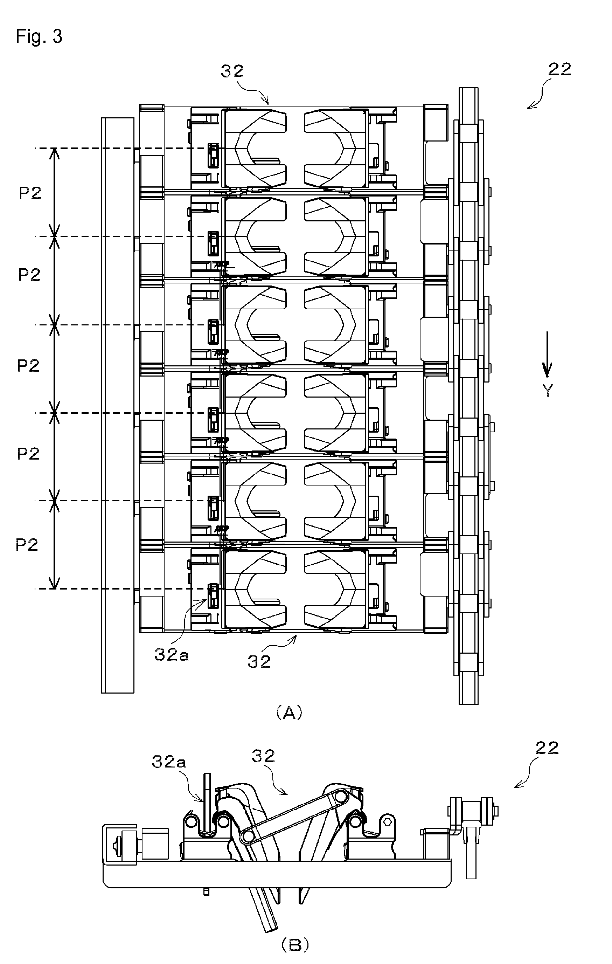

The second conveying portion 22 receives six eggs E corresponding to a single transverse row, whose orientation and pitch have been converted, in synchronization with its conveying speed, and sequentially and continuously conveys the eggs E in the direction of arrow Y. Accordingly, the second conveying portion 22 continuously conveys eggs at a speed about 6 times that of the first conveying portion 20. As shown in FIGS. 3A and 3B, the second conveying portion 22 includes multiple retaining containers 32 that are disposed under the transfer portion 24 and configured to individually retain eggs E delivered from the transfer portion 24.

FIG. 3A shows only six retaining containers 32; however, actually the multiple retaining containers 32 are arranged to form an endless orbital path. In other words, the second conveying portion 22 is a bucket conveyor in which the multiple retaining containers 32 arranged at regular intervals at the second pitch P2 continuously move in the direction of arrow Y while retaining eggs E, thereby continuously conveying eggs E. In the second conveying portion 22, the buckets form an endless orbital path and perform an orbital motion.

The retaining containers 32 are only required to be able to retain eggs E during conveyance, and may also be, for example, fingers that retain eggs E by gripping them (see JP H11-079345A), instead of buckets, such as those described in this embodiment, that retain eggs E by supporting them. Which retaining container 32 of the second conveying portion 22 retains an egg E whose position in the conveying direction (direction of arrow X) of the first conveying portion has been specified by the first encoder 30 in the first conveying portion 20 is specified by specifying the position of that egg E in the first conveying portion 20 in the direction of arrow Y.

The retaining containers 32 of the second conveying portion 22 convey eggs E, while individually retaining the eggs E, toward a plurality of collecting sections 34 that are disposed downstream of the transfer portion 24. The second conveying portion 22 is provided with a second encoder 36 that is operable in response to the movement of the retaining containers 32, and the positions of eggs E retained by the individual retaining containers 32 adjacent to one another at the second pitch P2 are thus specified.

The packaging apparatus 12 includes the plurality of collecting sections 34 that are connected to the second conveying portion 22. Each collecting section 34 receives eggs E that meet the conditions for receiving eggs from the second conveying portion 22, fills the packaging cartons16 with the eggs E, and packages the eggs E. In order for each collecting section 34 to receive eggs from the second conveying portion 22, levers 32a (see FIGS. 3A and 3B) of the individual retaining containers 32 are activated by a conventionally well-known kick mechanism 38 (see JP H8-82546A, for example) to open the retaining containers 32. Thus, eggs E are discharged into the packaging cartons.

In this embodiment, there are six collecting sections 34, and eggs E that meet the conditions for receiving eggs of the individual collecting sections 34 are released from the retaining containers 32 by the kick mechanisms 38 and received by the corresponding collecting sections 34. For example, the conditions for receiving eggs of the individual collecting sections are set via the controller 14 based on the weights of eggs, for example, large size (L), large size (L), medium size (M), medium size (M), small size (S), and extra-large size (LL) in that order from the most upstream collecting section. In this embodiment, the sorting and packaging system has six collecting sections, but this has no relation to that the first conveying portion 20 conveys eggs in the six longitudinal lines. That is to say, the number of collecting sections may be different from the number of longitudinal lines ("n" longitudinal lines) of the first conveying portion.

### Description of Transfer Portion

The transfer portion 24 is interposed between the first conveying portion 20 and the second conveying portion 22 and transfers eggs E from the first conveying portion 20 to the second conveying portion 22. In this embodiment, the transfer portion 24 receives six eggs E corresponding to a single transverse row of eggs E that have been conveyed in the six longitudinal lines from the first conveying portion 20, and transfers the eggs E to the second conveying portion 22, which conveys eggs E in a single lateral line. Since the first conveying portion 20 and the second conveying portion 22 continuously convey eggs E, the transfer portion 24 also continuously transfers six eggs E to the second conveying portion 22.

As shown in FIGS. 2, 4, and 8A to 8C, the transfer portion 24 includes an orientation changing portion 40 that receives eggs E oriented with their major axes extending in the longitudinal direction from the first conveying portion 20 and changes the orientations of the eggs E so that the eggs E are oriented with their major axes extending in the vertical direction, a pitch converting portion 42 that receives six eggs E corresponding to a single transverse row of eggs E arranged in the six longitudinal lines substantially at the same time at the first pitch P1 from the first conveying portion 20 via the orientation changing portion 40 and converts the first pitch P1 to the second pitch P2 that is smaller than the first pitch P1, and a speed synchronizing portion 44 that receives six eggs E at the second pitch P2 from the pitch converting portion 42 and delivers the six eggs E to the second conveying portion 22 with the six eggs E remaining at the second pitch P2, while synchronizing their speed with the conveying speed of the retaining containers 32 of the second conveying portion 22.

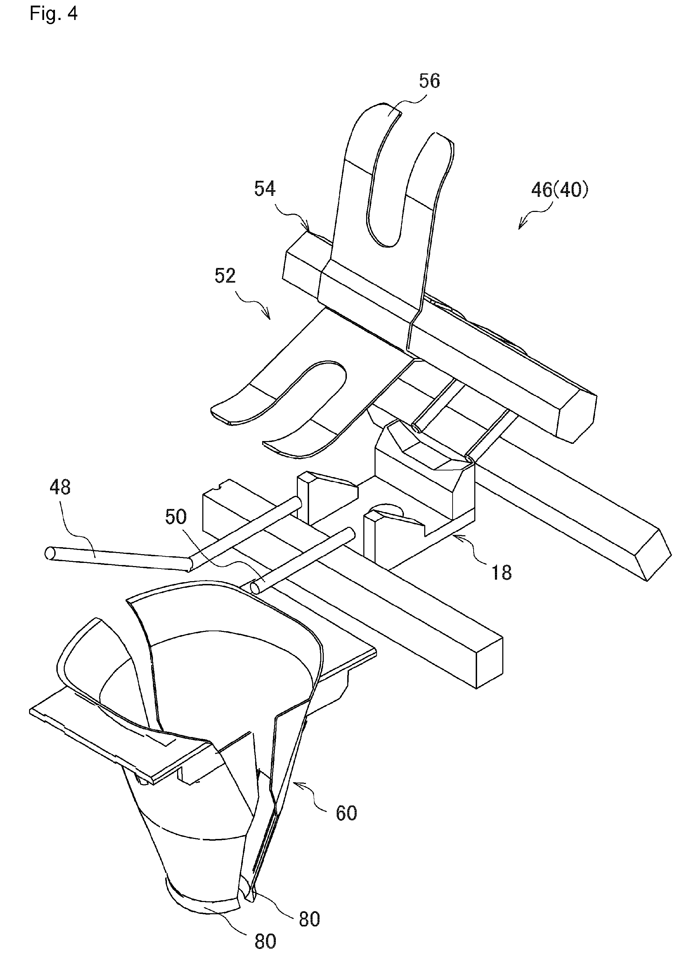

The orientation changing portion 40 includes six orientation changing structures 46 that are disposed at the first pitch P1. As shown in FIG. 4, each orientation changing structure 46 includes two guides 48 and 50 that are arranged parallel to each other at a predetermined interval in the lateral direction and extend for different lengths and a pressing mechanism 52 that presses against an egg E that has reached near the end of the first conveying portion 20 in the conveying direction of the first conveying portion 20 and carries the egg E to the two guides. The pressing mechanism 52 has a rotary impeller 54, as is conventionally well known, and rotation of the impeller 54 allows a blade 56 of the impeller 54 to press against and carry the egg E from the first conveying portion 20 to the two guides 48 and 50.

In this embodiment, the first, longer guide 48 of the two guides 48 and 50 is disposed so as to support the wide end side of an egg E, and the second, shorter guide 50 is disposed so as to support the narrow end side of the egg E. The egg E is conveyed while rolling on the two guides in the conveying direction of the first conveying portion 20, and when the egg E has reached the end of the second guide 50, the egg E leaves the second guide 50 and thus falls while rotating about the first guide 48 that is longer than the second guide 50. Consequently, the egg E falls with its orientation changed so that the narrow end side points downward.

In this embodiment, the first guide 48 is bent obliquely upward at a position corresponding to the vicinity of the end of the second guide 50 in the longitudinal direction. The egg E is pressed against by the impeller 54 and thus advances in the conveying direction of the first conveying portion 20, but the speed of the egg E in the conveying direction is reduced by the egg E rolling on the first guide 48 that is bent obliquely upward. The egg E whose speed has been reduced reliably falls into a first egg receptacle 60, which will be described later.

In this embodiment, in the orientation changing portion 40, the egg E is conveyed on the two guides 48 and 50 having different lengths, and as a result of the narrow end side of the egg E leaving the shorter, second guide 50, the orientation of the egg E is changed so that its narrow end side points downward. However, the orientation changing portion 40 may also have any other structure as long as the orientations of eggs can be changed so that the major axes of the eggs are oriented in the vertical direction. For example, egg orientation may be changed by a mechanism that temporarily retains an egg E in an egg receptacle, rotates the orientation of the egg by rotating the egg receptacle, and then releases the retained egg E (see JP2011-173714A, for example).

The pitch converting portion 42 is provided under the orientation changing portion 40, and as shown in FIGS. 5A to 7C, the pitch converting portion 42 includes six first egg receptacles 60 configured to receive six eggs E in one-to-one correspondence from the first conveying portion 20 at the first pitch P1 and a driving mechanism 62 that performs driving so that the pitch between the six first egg receptacles 60 is converted. Each of the first egg receptacles 60 is configured to accommodate and discharge an egg E.

Moreover, the six first egg receptacles 60 are arranged side-by-side in the lateral direction, and in a first position, the six first egg receptacles 60 receive eggs E whose orientations have been changed by the orientation changing portion 40 so that the major axes are oriented in the vertical direction. The first position is determined so that the egg receptacles receive eggs E from the orientation changing portion 40 at the first pitch P1. FIGS. 5A to 5C show the first egg receptacles 60 that are placed in the first position and are ready to receive eggs E at the first pitch P1. The six first egg receptacles arranged in the first position individually receive six eggs at the first pitch P1 from the first conveying portion 20.

After the six first egg receptacles 60 have received the six eggs E at the first pitch P1 in the first position, the first egg receptacles 60 are moved to a second position by the driving mechanism 62, and the pitch between the receptacles is thus changed to the second pitch P2. The second position is determined so that the six egg receptacles can appropriately deliver the eggs E to the speed synchronizing portion 44 (see FIGS. 8A to 8C) at the second pitch P2. FIGS. 6A to 6C show the first egg receptacles 60 after being moved to the second position and before discharging the eggs E at the second pitch P2. The six first egg receptacles 60 deliver the six eggs at the second pitch P2 to the second conveying portion 22 in the second position.

The driving mechanism 62 includes two end members 66 respectively coupled to the first egg receptacles 60s of the six first egg receptacles 60 that are located at both ends, a pair of penetrating members 68 extending in the lateral direction so as to penetrate the first egg receptacles 60 and the end members 66, driving mechanism main bodies 70 to which each penetrating member 68 is coupled at respective ends, expansion/contraction members 72 that are provided so as to connect the six first egg receptacles 60 together and that expand and contract between the six first egg receptacles 60, and an interval changing member 74 that is coupled to the end members 66 and changes the interval between the end members 66.

The driving mechanism main bodies 70 are fixed to the sorting and packaging system S, the pair of penetrating members 68 coupled to the driving mechanism main bodies 70 penetrate the first egg receptacles 60, and thus the first egg receptacles 60 are supported so as to be movable in the direction (lateral direction) in which the penetrating members 68 extend. The interval changing member 74 is connected to a driving source (not shown), and changes the interval between the end members 66, which are coupled to the interval changing member 74, by a rotating member 76 of the interval changing member 74 rotating and thereby driving a pair of rod-like members 78 coupled to the rotating member 76 (see FIGS. 5A to 6C). The rotating member 76 of the interval changing member 74 is connected to the aforementioned driving source and rotated alternately in opposite directions about an axis extending in the vertical direction so that the first egg receptacles 60 reciprocate between the first position and the second position.

When the interval between the end members 66 is changed, the first egg receptacles 60s on both sides that are coupled to the respective end members 66 move. Adjacent two first egg receptacles 60 of the six first egg receptacles 60 are interconnected via the expansion/contraction members 72, and as the first egg receptacles 60s on both sides move, the expansion/contraction members 72 expand/contract, causing the first egg receptacles 60 to move so that the first egg receptacles 60 are arranged at the same pitch.

Thus, the first egg receptacles 60 can move so that the egg receptacles are arranged at the first pitch P1 in the first position and arranged at the second pitch P2 in the second position. Accordingly, the driving mechanism 62 causes the six first egg receptacles 60 to reciprocate between the first position and the second position by the alternate rotation of the rotating member 76.

In this embodiment, the six first egg receptacles 60 move linearly only in the lateral direction between the first position and the second position. Thus, the reciprocating motion can be achieved by a simple structure. However, the first position and the second position may have other relationships as long as the egg receptacles operate so as to receive eggs E from the first conveying portion 20, change the pitch from the first pitch P1 to the second pitch P2, and deliver the eggs E to the speed synchronizing portion 44. For example, it is also possible that a plurality of egg receptacles move obliquely upward/downward (in an oblique direction including the lateral direction) between the first position and the second position.

Moreover, each of the first egg receptacles 60 includes a pair of supporting members 80 that can open and close in the longitudinal direction in order to support an egg (see FIG. 4). In the first position, the pair of supporting members 80 is closed so as to be able to receive and retain an egg E, while in the second position, the pair of supporting members 80 is opened so as to be able to discharge the egg E in order to deliver the egg E to the speed synchronizing portion 44. The first egg receptacles 60 are connected to the aforementioned driving source, and are opened and closed in conjunction with their reciprocating motion.

In this embodiment, the penetrating members 68 penetrate the supporting members 80, and the supporting members 80 are configured to be able to open and close about the penetrating members 68 serving as the axes. Thus, the penetrating members 68 support the supporting members so that the supporting members are rotatable and movable in the lateral direction. The supporting members 80 are closed in conjunction with the movement of the first egg receptacles 60 to the first position and opened in conjunction with the movement of the first egg receptacles 60 to the second position.

FIGS. 7A to 7C show the first egg receptacles 60 that are opened in the second position in order to discharge eggs E at the second pitch P2 while synchronizing the speed of the eggs E with that of the second conveying portion 22. It is sufficient if the first egg receptacles 60 can deliver six eggs E at the second pitch to respective second egg receptacles 82 of the speed synchronizing portion in the second position.

The speed synchronizing portion 44 is provided under the pitch converting portion 42, as shown in FIGS. 8A to 8C, and includes a receptacle unit 84 constituted by six second egg receptacles 82 that receive eggs E from the six first egg receptacles 60 of the pitch converting portion 42 in one-to-one correspondence and a synchronizing unit 86 that moves the receptacle unit 84 in the direction of arrow Y and synchronizes the speed of the receptacle unit 84 with that of the second conveying portion 22.

The synchronizing unit 86 is connected to an elongated member 88 that is connected to the receptacle unit 84, extends in the lateral direction, and is capable of reciprocating in the extending direction. With this configuration, in the receptacle unit 84, when the elongated member 88 moves in the lateral direction, the second egg receptacles 82 are pushed or pulled by the elongated member 88 and thus moved in the lateral direction. The second egg receptacles 82 are fixed to each other, and the pitch of the six second egg receptacles is maintained at the pitch P2.

The elongated member 88 is connected to the aforementioned driving source, and causes the second egg receptacles 82 to reciprocate between a third position and a fourth position in conjunction with the reciprocating motion of the pitch converting portion 42. In a state in which the elongated member 88 has completely pulled the receptacle unit 84, the second egg receptacles 82 are located in the third position, and in a state in which the elongated member 88 has completely pushed the receptacle unit 84, the second egg receptacles 82 are located in the fourth position.

The third position is determined so that the second egg receptacles 82 can receive six eggs E from the first egg receptacles 60, and the fourth position is determined so that the second egg receptacles 82 can deliver the eggs to the retaining containers 32 of the second conveying portion 22 in synchronization. The second egg receptacles 82 are only required to be capable of reciprocating so that the second egg receptacles 82 receive six eggs from the first egg receptacles 60 in the third position and deliver the eggs to the retaining containers 32 in the fourth position.

Each of the second egg receptacles 82 is located under the corresponding first egg receptacle 60 so as to receive an egg E discharged from the first egg receptacle 60 in the second position and includes, like the first egg receptacles 60, a pair of supporting members 90 that is capable of opening and closing in the longitudinal direction. In the third position, the pair of supporting members 90 is closed so as to be able to support an egg E in order to receive the egg E with its major axis extending in the vertical direction, and in the fourth position, the pair of supporting members 90 is opened so as to be able to discharge an egg E in order to deliver the egg E to the corresponding retaining container 32 of the second conveying portion 22. That is to say, the second egg receptacles 82 open and close in conjunction with their reciprocating motion.

The second egg receptacles 82 in the third position are arranged at a pitch that matches the second pitch P2 under the first egg receptacles 60 that are arranged at the second pitch P2 in the second position. Thus, the second egg receptacles 82 in the third position can receive six eggs E at the second pitch P2 from the pitch converting portion 42. Also, after receiving the eggs E from the pitch converting portion 42, the second egg receptacles 82 are moved toward the fourth position by the synchronizing unit 86.

Furthermore, after the six second egg receptacles 82 have moved to the fourth position by being pushed by the elongated member 88, and the speed thereof has become substantially equal to, that is, has been synchronized with the speed of the retaining containers 32 of the second conveying portion 22, the six second egg receptacles 82 discharge the six eggs E with the eggs E remaining at the second pitch P2. Synchronization as used herein includes, for example, that the second egg receptacles 82 have a velocity component in the same direction as that of the retaining containers 32 of the second conveying portion 22, and is not limited to having the same velocity component in the same direction.

Moreover, the second egg receptacles 82 that have discharged the eggs E in the fourth position are pulled by the elongated member 88 and thus move in the direction opposite to the direction of arrow Y, thereby returning to the third position. FIGS. 8A to 8C schematically show the first egg receptacles 60 that are located in the first position and the second egg receptacles 82 that are located in the third position.

In this embodiment, the first egg receptacles 60, the second egg receptacles 82, and the like are conventionally well-known buckets capable of retaining and discharging eggs E (see JP 2008-179475A, for example). However, the first egg receptacles, the second egg receptacles 82, and the like may also be retaining mechanisms that individually retain eggs E with an egg accommodating member and a gripping member and discharge the eggs E by a rotational motion (see JP 2011-173714A, for example).

Next, the operation of the transfer portion 24 will be described.

Eggs E are continuously conveyed through the first conveying portion 20 in six longitudinal lines and also continuously conveyed in the second conveying portion 22. Accordingly, the orientation changing portion 40, the pitch converting portion 42, and the speed synchronizing portion 44 of the transfer portion 24 also continuously transfer eggs E from the first conveying portion 20 to the second conveying portion 22. That is to say, changing of egg orientation by the orientation changing portion 40, conversion of the pitch of six eggs by the pitch converting portion 42, and synchronization by the speed synchronizing portion 44 are performed simultaneously.

In the first conveying portion, eggs arranged in the six longitudinal lines are continuously conveyed in the direction of arrow X. In the transfer portion 24, first, the first egg receptacles 60 of the pitch converting portion 42 receive six eggs (first egg group) at the first pitch, the six eggs corresponding to a single transverse row of the eggs arranged in the six longitudinal lines, from the first conveying portion (step S1). At this time, the second egg receptacles 82 of the speed synchronizing portion 44 move from the third position to the fourth position with six eggs (second egg group) from a preceding single transverse row that has been conveyed immediately prior to the first egg group in the first conveying portion being accommodated in the second egg receptacles 82, and discharge the second egg group in synchronization with the conveying speed of the retaining containers 32 of the second conveying portion 22.

Then, the first egg receptacles 60 convert the first pitch to the second pitch that is smaller than the first pitch (step S2). At this time, the second egg receptacles 82 finish discharging the second egg group and move from the fourth position to the third position.

Then, the first egg receptacles 60 discharge the first egg group E1 at the second pitch. At this time, the second egg receptacles 82 have returned to the third position, and receive the six eggs at the second pitch from the first egg receptacles 60 (step S3).

Then, the first egg receptacles 60 return to the first position in order to receive an egg group (third egg group) corresponding to a single transverse row that comes immediately after the first egg group. At this time, the second egg receptacles 82 move from the third position toward the fourth position (step S4).

The transfer portion 24 continuously transfers eggs from the first conveying portion to the second conveying portion by repeating steps S1 to S4. During these steps, the first egg receptacles 60 and the second egg receptacles 82 perform pitch conversion and speed synchronization, respectively, by their reciprocating motion. Note that synchronization as used herein includes, for example, that the second egg receptacles 82 have a velocity component in the same direction as that of the retaining containers 32 of the second conveying portion 22, and is not limited to having the same velocity component in the same direction.

The transfer portion that performs transfer by a reciprocating motion according to this embodiment of the present invention can significantly reduce the number of egg receptacles when compared with a transfer portion that performs transfer by an orbital motion. Thus, even in the case where an egg receptacle should be selectively cleaned because of, for example, breakage of an egg E, there is no need to perform an extensive operation such as moving the multiple egg receptacles in an orbital path in order to select that egg receptacle. In addition, the manufacturing costs of the apparatus can be significantly reduced, and the size of the apparatus can also be reduced. In particular, with respect to a sorting and packaging system having a first conveying portion in which eggs E are conveyed in a plurality of longitudinal lines and a second conveying portion in which eggs E are conveyed in a single lateral line, reduction in the number of egg receptacles has a great effect.

In the transfer portion according to this embodiment of the present invention, the egg orientation changing function, the egg pitch conversion function, and the function of synchronizing the speed with that of the second conveying portion are divided among the components thereof. Thus, the transfer portion can reliably achieve those functions and stably transfer eggs.

In the transfer portion according to this embodiment of the present invention, both the pitch converting portion and the speed synchronizing portion achieve their respective functions by a reciprocating motion. Thus, synchronization of the pitch converting portion and the speed synchronizing portion is facilitated, making it possible to reliably achieve the functions and stably transfer eggs.

In the transfer portion according to this embodiment of the present invention, the first egg receptacles reciprocate only in the conveying direction of the second conveying portion. Thus, the movement and the opening/closing of the first egg receptacles can be easily achieved, the structure of the apparatus can be simplified, and therefore stable transfer of eggs can be performed.

In this embodiment, the first conveying portion conveys eggs in six longitudinal lines. However, it is sufficient if the first conveying portion can convey eggs in two or more longitudinal lines, and, for example, the first conveying portion may convey eggs in twelve longitudinal lines. Also, although the second conveying portion conveys eggs in a single lateral line; however, it is sufficient if the second conveying portion can convey eggs in at least one line, and, for example, the second conveying portion may convey eggs in two lateral lines.

In this embodiment, the pitch converting portion and the speed synchronizing portion are independently provided with egg receptacles, where the egg receptacles of the pitch converting portion performs pitch conversion, and the egg receptacles of the speed synchronizing portion perform speed synchronization. That is to say, the transfer portion includes two types of egg receptacles. However, it is also possible that the pitch converting portion and the speed synchronizing portion have common egg receptacles and the transfer portion includes one type of egg receptacles.

In this case, the egg receptacles ("n" egg receptacles) of that one type receive "n" eggs from the first conveying portion, the pitch between the "n" egg receptacles is converted, and the "n" egg receptacles at the converted pitch are synchronized with the speed of the second conveying portion and deliver the "n" eggs to the second conveying portion. That is to say, one type of egg receptacles is used for both pitch conversion and speed synchronization. The one type of egg receptacles may also be adapted to reciprocate so as to repeat the above operations.

The embodiment disclosed herein should be considered in all respects as illustrative and not restrictive. The scope of the invention is indicated by the appended claims rather than by the foregoing description, and all changes which come within the meaning and range of equivalency of the claims are therefore intended to be embraced therein.

The present invention can be used to transfer eggs.

### LIST OF REFERENCE NUMERALS

- S: Sorting and packaging system
- 20: First conveying portion
- 22: Second conveying portion
- 24: Transfer portion
- 40: Orientation changing portion
- 42: Pitch converting portion
- 44: Speed synchronizing portion
- 60: First egg receptacle
- 82: Second egg receptacle

## Claims

1. An egg conveying apparatus (10) comprising:
a first conveying portion (20) configured to convey eggs (E) arranged in "n" longitudinal lines in a longitudinal direction;
a second conveying portion (22) configured to receive eggs (E) from the first conveying portion (20) and to convey the eggs (E) in a lateral direction; and
a transfer portion (24) interposed between the first conveying portion (20) and the second conveying portion (22) and configured to transfer eggs (E) from the first conveying portion (20) to the second conveying portion (22),
the transfer portion (24) comprising:
a pitch converting portion (42) configured to receive "n" eggs (E) corresponding to a single transverse row of eggs (E) that are arranged in the "n" longitudinal lines from the first conveying portion (20) at a first pitch and to convert the first pitch to a second pitch that is smaller than the first pitch; and
a speed synchronizing portion (44) configured to receive "n" eggs (E) from the pitch converting portion (42) at the second pitch and to deliver the "n" eggs (E) to the second conveying portion (22) in synchronization with a conveying speed of the second conveying portion (22),
wherein the pitch converting portion (42) comprises "n" first egg receptacles (60) configured to receive "n" eggs (E) in one-to-one correspondence, and
the "n" first egg receptacles (60) are configured to repeat a reciprocating movement between a first position in which the first egg receptacles (60) receive eggs (E) at the first pitch and a second position in which the first egg receptacles (60) deliver eggs (E) to the speed synchronizing portion (44),
**characterized in that** the first egg receptacles (60) are configured to move only in the lateral direction between the first position and the second position.

2. The egg conveying apparatus (10) according to claim 1,
wherein the lateral direction and the longitudinal direction are defined in a substantially horizontal plane,
the first conveying portion (20) is configured to convey eggs (E) with major axes of the eggs (E) extending in the lateral direction, and
the transfer portion (24) further comprises an orientation changing portion (40) configured to receive "n" eggs (E) from the first conveying portion (20) with the major axes of the eggs (E) extending in the lateral direction, to change orientations of the eggs (E) so that the major axes of the eggs (E) extend in a vertical direction, and to deliver the "n" eggs (E) to the pitch converting portion (42).

3. The egg conveying apparatus (10) according to claim 1 or 2,
wherein the first egg receptacles (60) are configured to receive eggs (E) in a state in which the first egg receptacles (60) are stopped in the first position, to move to the second position in a state in which the eggs (E) are accommodated in the first egg receptacles (60), and to deliver the eggs (E) to the speed synchronizing portion (44) in the second position,
the speed synchronizing portion (44) comprises "n" second egg receptacles (82) arranged at the second pitch and configured to receive eggs (E) from the "n" first egg receptacles (60) in one-to-one correspondence with the first egg receptacles (60), and
the "n" second egg receptacles (82) are configured to repeat a reciprocating movement so that the second egg receptacles (82) receive eggs (E) from the first egg receptacles (60) in a state in which the second egg receptacles (82) are stopped in a third position, move in the lateral direction with the second pitch still maintained, deliver the eggs (E) to the second conveying portion (22) in synchronization with the conveying speed of the second conveying portion (22) in a fourth position, and furthermore, return to the third position.

4. A method for transferring eggs (E) from a first conveying portion (20) configured to convey eggs (E) arranged in "n" longitudinal lines in a longitudinal direction to a second conveying portion (22) configured to convey eggs (E) in a lateral direction, the method comprising:
a first step of receiving "n" eggs (E) corresponding to a single transverse row of eggs (E) that are arranged in the "n" longitudinal lines from the first conveying portion (20) at a first pitch with a pitch converting portion (42) comprising "n" egg receptacles (60);
a second step of converting the first pitch to a second pitch that is smaller than the first pitch after the first step;
a third step of receiving the "n" eggs (E) at the second pitch after the second step; and
a fourth step of delivering the "n" eggs (E) to the second conveying portion (22) in synchronization with a conveying speed of the second conveying portion (22) after the third step,
wherein the second step comprises performing pitch conversion from the first pitch to the second pitch by a reciprocating motion in which the egg receptacles (60) move only in the lateral direction between a first position in which the egg receptacles (60) receive the eggs (E) and a second position in which the egg receptacles (60) deliver the eggs (E), and
eggs (E) are continuously transferred from the first conveying portion (20) to the second conveying portion (22) by repeating the first to fourth steps.

## Patentansprüche

1. Fördervorrichtung (10) für Eier, umfassend:
einen ersten Förderabschnitt (20), der dazu eingerichtet ist, Eier (E), die in "n" längsverlaufenden Linien angeordnet sind, in Längsrichtung zu fördern;
einen zweiten Förderabschnitt (22), der dazu eingerichtet ist, Eier (E) aus dem ersten Förderabschnitt (20) aufzunehmen und die Eier (E) in Querrichtung zu fördern; und
einen Überführungsabschnitt (24), der sich zwischen dem ersten Förderabschnitt (20) und dem zweiten Förderabschnitt (22) befindet und dazu eigerichtet ist, Eier (E) aus dem ersten Förderabschnitt (20) zu dem zweiten Förderabschnitt (22) zu überführen,
wobei der Überführungsabschnitt (24) umfasst:
einen Abstandsveränderungsabschnitt (42), der dazu eingerichtet ist, "n" Eier (E) entsprechend einer einzelnen querliegenden Reihe von Eiern (E), die in den "n" längsverlaufenden Linien des ersten Förderabschnitts (20) mit einem ersten Abstand angeordnet sind, aufzunehmen und den ersten Abstand zu einem zweiten Abstand, der kleiner ist als der erste Abstand, zu verändern; und
einen Geschwindigkeitssynchronisierungsabschnitt (44), der dazu eingerichtet ist, "n" Eier (E) aus dem Abstandsveränderungsabschnitt (42) mit dem zweiten Abstand aufzunehmen und die "n" Eier (E) synchronisiert mit einer Fördergeschwindigkeit des zweiten Förderabschnitts (22) dem zweiten Förderabschnitt (22) zuzuführen,
wobei der Abstandsveränderungsabschnitt (42) "n" erste Eieraufnahmen (60) umfasst, die dazu eingerichtet sind, "n" Eier (E) in eins-zu-eins Übereinstimmung aufzunehmen, und
die "n" ersten Eieraufnahmen (60) dazu eingerichtet sind, eine Hin- und Herbewegung zwischen einer ersten Position, in welcher die ersten Eieraufnahmen (60) Eier (E) mit dem ersten Abstand aufnehmen, und einer zweiten Position, in welcher die ersten Eieraufnahmen (60) die Eier (E) dem Geschwindigkeitssynchronisierungsabschnitt (44) zuführen, zu wiederholen,
**dadurch gekennzeichnet, dass** die ersten Eieraufnahmen (60) dazu eingerichtet sind, sich nur in Querrichtung zwischen der ersten und zweiten Position zu bewegen.

2. Fördervorrichtung (10) für Eier nach Anspruch 1,
wobei die Querrichtung und die Längsrichtung in einer im Wesentlichen horizontalen Ebene festgelegt sind,
der erste Förderabschnitt (20) dazu eingerichtet ist, die Eier (E) derart zu fördern, dass sich ihre Hauptachsen in Querrichtung erstrecken, und
der Überführungsabschnitt (24) ferner einen Orientierungsveränderungsabschnitt (40) umfasst, der dazu eingerichtet ist, "n" Eier (E) mit sich in Querrichtung erstreckenden Hauptachsen von dem ersten Förderabschnitt (20) aufzunehmen, Orientierungen der Eier (E) zu verändern, sodass sich die Hauptachsen der Eier (E) in eine vertikale Richtung erstrecken, und die "n" Eier (E) zu dem Abstandsveränderungsabschnitt (42) zu fördern.

3. Fördervorrichtung (10) für Eier nach Anspruch 1 oder 2,
wobei die ersten Eieraufnahmen (60) dazu eingerichtet sind, die Eier (E) in einem Zustand aufzunehmen, in dem die ersten Eieraufnahmen (60) in der ersten Position festgesetzt sind, sich in die zweite Position in einen Zustand zu bewegen, in welchem die Eier (E) in den ersten Eieraufnahmen (60) beherbergt werden, und die Eier (E) in der zweiten Position zu dem Geschwindigkeitssynchronisierungsabschnitt (44) zu fördern,
der Geschwindigkeitssynchronisierungsabschnitt (44) "n" zweite Eieraufnahmen (82) umfasst, die mit dem zweiten Abstand angeordnet sind und dazu eingerichtet sind, Eier (E) aus den "n" ersten Eieraufnahmen (60) in eins-zu-eins Übereinstimmung mit den ersten Eieraufnahmen (60) aufzunehmen, und
die "n" zweiten Eieraufnahmen (82) dazu eingerichtet sind, die Hin- und Herbewegung zu wiederholen, sodass die zweiten Eieraufnahmen (82) Eier (E) aus den ersten Eieraufnahmen (60) in einem Zustand aufnehmen, in welchem die zweiten Eieraufnahmen (82) in einer dritten Position festgesetzt sind, sich in Querrichtung den zweiten Abstand immer noch haltend zu bewegen, die Eier (E) zu dem zweiten Förderabschnitt (22) synchron mit der Geschwindigkeit des zweiten Förderabschnitts (22) in eine vierte Position zu fördern, und außerdem in die dritte Position zurückzukehren.

4. Verfahren zum Überführen von Eiern (E) von einem ersten Förderabschnitt (20), der dazu eingerichtet ist, Eier (E), die in "n" längsverlaufenden Linien angeordnet sind, in Längsrichtung zu fördern, zu einem zweiten Förderabschnitt (22), der dazu eingerichtet ist, Eier (E) in Querrichtung zu fördern, wobei das Verfahren umfasst:
einen ersten Schritt, in welchem "n" Eier (E) entsprechend einer einzelnen querliegenden Reihe von Eiern (E), die in den "n" längsverlaufenden Linien des ersten Förderabschnitts (20) mit einem ersten Abstand angeordnet sind, mit einem Abstandsveränderungsabschnitt (42), der "n" Eieraufnahmen (60) umfasst, aufgenommen werden;
einen zweiten Schritt, in welchem nach dem ersten Schritt der erste Abstand zu einem zweiten Abstand, der kleiner ist als der erste Abstand, verändert wird;
einen dritten Schritt, in welchem "n" Eier (E) mit dem zweiten Abstand nach dem zweiten Schritt aufgenommen werden; und
einem vierten Schritt, in welchem die "n" Eier (E) zu dem zweiten Förderabschnitt (22) synchron mit einer Fördergeschwindigkeit des zweiten Förderabschnitts (22) nach dem dritten Schritt gefördert werden,
wobei der zweite Schritt das Ausführen einer Abstandsumstellung von dem ersten Abstand zu dem zweiten Abstand mittels Hin- und Herbewegung, in welcher die Eieraufnahmen (60) sich nur in Querrichtung zwischen einer ersten Position, in der die Eieraufnahmen (60) die Eier (E) aufnehmen, und einer zweiten Position, in der die Eieraufnahmen (60) die Eier (E) fördern, bewegen, umfasst, und
Eier (E) kontinuierlich aus dem ersten Förderabschnitt (20) zu dem zweiten Förderabschnitt (22) mittels Wiederholen der ersten bis vierten Schritte überführt werden.

## Revendications

1. Appareil de transport d'oeufs (10) comprenant :
une première partie de transport (20) configurée pour transporter des oeufs (E) agencés en « n » lignes longitudinales dans une direction longitudinale ;
une seconde partie de transport (22) configurée pour recevoir des oeufs (E) à partir de la première partie de transport (20) et pour transporter les oeufs (E) dans une direction latérale ; et
une partie de transfert (24) interposée entre la première partie de transport (20) et la seconde partie de transport (22) et configurée pour transférer des oeufs (E) de la première partie de transport (20) vers la seconde partie de transport (22),
la partie de transfert (24) comprenant :
une partie de conversion de pas (42) configurée pour recevoir « n » oeufs (E) correspondant à une seule rangée transversale d'oeufs (E) qui sont agencés dans les « n » lignes longitudinales à partir de la première partie de transport (20) à un premier pas et pour convertir le premier pas en un second pas qui est inférieur au premier pas ; et
une partie de synchronisation de vitesse (44) configurée pour recevoir « n » oeufs (E) à partir de la partie de conversion de pas (42) au second pas et pour délivrer les « n » oeufs (E) à la seconde partie de transport (22) en synchronisme avec une vitesse de transport de la seconde partie de transport (22),
dans lequel la partie de conversion de pas (42) comprend « n » premiers réceptacles d'oeufs (60) configurés pour recevoir « n » oeufs (E) dans une correspondance biunivoque, et
les « n » premiers réceptacles d'oeufs (60) sont configurés pour répéter un mouvement de va-et-vient entre une première position dans laquelle les premiers réceptacles d'oeufs (60) reçoivent des oeufs (E) au premier pas et une seconde position dans laquelle les premiers réceptacles d'oeufs (60) délivrent des oeufs (E) à la partie de synchronisation de vitesse (44),
**caractérisé en ce que** les premiers réceptacles d'oeufs (60) sont configurés pour bouger seulement dans la direction latérale entre la première position et la seconde position.

2. Appareil de transport d'oeufs (10) selon la revendication 1,
dans lequel la direction latérale et la direction longitudinale sont définies dans un plan sensiblement horizontal,
la première partie de transport (20) est configurée pour transporter des oeufs (E) avec les axes principaux des oeufs (E) s'étendant dans la direction latérale, et
la partie de transfert (24) comprend en outre une partie de changement d'orientation (40) configurée pour recevoir « n » oeufs (E) à partir de la première partie de transport (20) avec les axes principaux des oeufs (E) s'étendant dans la direction latérale, pour modifier les orientations des oeufs (E) de sorte que les axes principaux des oeufs (E) s'étendent dans une direction verticale, et pour délivrer les « n » oeufs (E) à la partie de conversion de pas (42).

3. Appareil de transport d'oeufs (10) selon la revendication 1 ou 2,
dans lequel les premiers réceptacles d'oeufs (60) sont configurés pour recevoir des oeufs (E) dans un état dans lequel les premiers réceptacles d'oeufs (60) sont arrêtés dans la première position, pour passer à la seconde position dans un état dans lequel les oeufs (E) sont logés dans les premiers réceptacles d'oeuf (60), et pour délivrer les oeufs (E) à la partie de synchronisation de vitesse (44) dans la seconde position,
la partie de synchronisation de vitesse (44) comprend « n » seconds réceptacles d'oeufs (82) agencés au second pas et configurés pour recevoir des oeufs (E) à partir des « n » premiers réceptacles d'oeufs (60) dans une correspondance biunivoque avec les premiers réceptacles d'oeufs (60), et les « n » seconds réceptacles d'oeufs (82) sont configurés pour répéter un mouvement de va-et-vient de sorte que les seconds réceptacles d'oeufs (82) reçoivent des oeufs (E) à partir des premiers réceptacles d'oeufs (60) dans un état dans lequel les seconds réceptacles d'oeufs (82) sont arrêtés dans une troisième position, bougent dans la direction latérale avec le second pas toujours maintenu, délivrent les oeufs (E) à la seconde partie de transport (22) en synchronisme avec la vitesse de transport de la seconde partie de transport (22) dans une quatrième position, et reviennent, en outre, à la troisième position.

4. Procédé de transfert d'oeufs (E) à partir d'une première partie de transport (20) configurée pour transporter des oeufs (E) agencés en « n » lignes longitudinales dans une direction longitudinale vers une seconde partie de transport (22) configurée pour transporter des oeufs (E) dans une direction latérale, le procédé comprenant :
une première étape de réception de « n » oeufs (E) correspondant à une seule rangée transversale d'oeufs (E) qui sont agencés en les « n » lignes longitudinales à partir de la première partie de transport (20) à un premier pas avec une partie de conversion de pas (42) comprenant « n » réceptacles d'oeufs (60) ;
une deuxième étape de conversion du premier pas en un second pas qui est inférieur au premier pas après la première étape ;
une troisième étape de réception des « n » oeufs (E) au second pas après la deuxième étape ; et
une quatrième étape de délivrance des « n » oeufs (E) à la seconde partie de transport (22) en synchronisme avec une vitesse de transport de la seconde partie de transport (22) après la troisième étape,
dans lequel la deuxième étape comprend l'exécution d'une conversion de pas du premier pas au second pas par un mouvement de va-et-vient dans lequel les réceptacles d'oeufs (60) bougent seulement dans la direction latérale entre une première position dans laquelle les réceptacles d'oeufs (60) reçoivent les oeufs (E) et une seconde position dans laquelle les réceptacles d'oeufs (60) délivrent les oeufs (E), et
des oeufs (E) sont transférés de façon continue à partir de la première partie de transport (20) vers la seconde partie de transport (22) en répétant les première à quatrième étapes.
